Europäisches Patentamt

European Patent Office

Office européen des brevets

(19)

(11) Publication number: **0 006 943**
**B1**

# EUROPEAN PATENT SPECIFICATION

(45) Date of publication of patent specification: 02.05.84

(51) Int. Cl.³: **F 16 H 45/02**

(21) Application number: **78900249.0**

(22) Date of filing: **10.11.78**

(86) International application number:
**PCT/JP78/00023**

(87) International publication number:
**WO 79/00410 12.07.79 Gazette 79/14**

(54) **CONTROL DEVICE FOR A TORQUE CONVERTER IN AN AUTOMATIC SPEED CHANGE GEAR FOR VEHICLES.**

(30) Priority: **20.12.77 JP 153873/77**

(43) Date of publication of application:
**23.01.80 Bulletin 80/2**

(45) Publication of the grant of the patent:
**02.05.84 Bulletin 84/18**

(84) Designated Contracting States:
**DE FR GB**

(56) References cited:
**DE - B - 1 550 825**
**FR - A - 2 317 556**
**GB - A - 1 352 465**
**JP - A - 52 003 977**
**JP - A - 52 101 359**
**JP - A - 52 101 360**
**JP - B - 32 005 206**
**JP - U - 49 044 987**
**JP - U - 52 013 381**
**JP - U - 52 129 889**
**JP - U - 52 149 989**
**US - A - 3 079 756**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **NISHIMURA, Sadanori**
**299-10, Tsuchiya**
**Ohmiya-shi, Saitama-ken, 330 (JP)**

(74) Representative: **Andrews, Robert Leonard et al,**
**HASELTINE LAKE & Co. Hazlitt House, 28 Southampton Buildings Chancery Lane London WC2A 1AT (GB)**

(56) References cited:

**US - A - 3 542 174**
**US - A - 3 693 478**
**US - A - 3 985 046**

Courier Press, Leamington Spa, England.

Control device for a torque converter in an automatic speed change gear for vehicles

The present invention relates to a direct coupling control device for a torque converter in an automatic speed change gear for vehicles principally used in automobiles.

The invention is concerned with an arrangement wherein a direct coupling clutch interposed between a pump disc and turbine disc which constitute a torque converter is operated when the turbine disc reaches a speed of rotation in excess of a given value so that when the torque converter is effecting no speed changing action, slip loss in the torque converter may be avoided by the operation of the direct coupling clutch to enhance the transmission efficiency and to improve the fuel consumption.

Such an arrangement has been disclosed in French Patent Specification No. 2317556.

The present invention is a development of the arrangement of the French Specification and is intended to provide an improved arrangement wherein, in case of the provision of at least two-stage (high and low) speed change gear devices, even if the rotational speed of the turbine disc reaches the aforementioned given value, the direct coupling clutch is not operated as long as the high speed gear device is kept out of operation so that particularly when the low speed gear device (required to give good acceleration) is in operation, the torque increasing action of the torque converter is sufficiently utilised at all times so as not to impair the accelerating performance of the vehicle, and when shifting down or switching in operation from the high speed gear device to the low speed gear device is effected during running at high speeds, unfavourable situations such as occurrence of dangerous excessive deceleration and overrun of the engine are avoided.

To this end, according to the present invention there is provided a control device for a torque converter in an automatic speed change gear for vehicles, the automatic speed change gear having an input shaft connected to a driving shaft of the engine through a torque converter; the torque converter having a pump disc associated with the driving shaft and a turbine disc associated with the input shaft; the input shaft being connected to an output shaft through an at least two-stage, low speed gear device and high speed gear device having respective hydraulically operated clutch means including, for the high speed gear device, a hydraulically operated clutch mounted on the input shaft; there being disposed between oil pressure cylinders of said hydraulically operated clutch means and an oil pressure source a shift valve for selectively communicating the oil pressure source with one of these oil pressure cylinders; and there being interposed between the pump disc and the turbine disc a hydraulically operated direct coupling clutch which is capable of directly coupling the pump and turbine discs; the direct coupling clutch comprising an oil pressure cylinder formed in one of opposed annular inner peripheral walls of the pump and turbine discs, which walls define therebetween a transmission oil passage, and a clutch operating pressure piston received in the oil pressure cylinder so that oil pressure in the transmission oil passage acts on the front surface of the pressure piston; and there being a centrifugal valve disposed between the oil pressure cylinder of the direct coupling clutch, a high pressure oil passage connected to the oil pressure cylinder of the hydraulically operated clutch for the high speed gear device and a low pressure oil passage connected to an oil reservoir, this centrifugal valve being operatively connected with the turbine disc for serving to place the oil pressure cylinder of the direct coupling clutch in communication with the low pressure oil passage at the time of low speed rotation and with the high pressure oil passage at the time of high speed rotation, the centrifugal valve having an annular valve body fitted between the turbine disc and the input shaft, and being hydraulically connected with the hydraulically operated clutch for the high speed gear device through an oil passage in the input shaft; characterised in that the valve body of the centrifugal valve rotates fast with the turbine disc; and in that the centrifugal valve further comprises a valve port formed in its valve body and extending at right angles to the axial direction of the input shaft, a spool valve slidably fitted in this valve port, a biasing means for biasing the spool valve in one axial direction of the valve port, and a centrifugal weight pivotally supported on the valve body at a location spaced radially from the axis of the input shaft, the centrifugal weight having an operation arm in abutting engagement with the spool valve for serving to displace the spool valve in the opposite axial direction of the valve port against the force of said biasing means.

The above arrangement provides the following advantages.

Since at least two-stage, high and low, speed change gear devices are provided, adapted to be selectively operated by the shift valve, the high pressure oil passage connected with the centrifugal valve is placed into communication with the oil pressure cylinder of the hydraulically operated means of the high speed gear device so that even if the rotational speed of the turbine disc reaches the aforementioned given value, the aforementioned direct coupling clutch is not brought into operation unless the high speed gear device is operated. Accordingly, particularly when the low speed gear device is operated during the acceleration of the vehicle, the torque increasing action of the torque converter may be sufficiently utilised to obtain the desired accelerating performance, and further, at the time of the shifting down during high speed running, the direct coupling clutch may be immediately released to induce the torque converter to give rise to an adequate rate of slip, and as a result, it is possible to avoid inconveniencies such as generation of an excessive deceleration of the vehicle or overrun of the engine.

Further, both the spool valve and the centrifugal weight can be disposed along the circumferential direction of the input shaft in an adjacent relation to each other to make the entire centrifugal valve compact in the radial direction of the input shaft so that the centrifugal valve having such construction can be incorporated into a narrow space such as in a boss portion of the turbine disc without difficulty, serving to reduce the total size of the torque converter. In addition, even with the provision of the centrifugal valve, the input shaft does not lose the balance in its inertia mass in the circumferential direction.

Furthermore, due to the arrangement that the centrifugal weight is formed separately from the spool valve and is pivotally supported at a point on the centrifugal valve body for radial movement, the timing of change-over operation of the spool valve from a first position, in which the oil pressure cylinder of the direct coupling clutch is in communication with the low pressure oil passage, to a second position, in which this oil pressure cylinder is in communication with the high pressure oil passage, can be easily set up and changed by appropriately selecting the inertia mass of the centrifugal weight and the lever ratio of that weight to the pivot point without altering the structure of the spool valve itself. This arrangement enables to easily design the centrifugal valve as having a desired operation characteristic. In particular, by appropriately selecting the above-mentioned lever ratio, the centrifugal force acting on the centrifugal weight can be increased to mightily press the spool valve while reducing the displacing stroke of the spool valve in comparison with that of the centrifugal weight. Therefore, once the input shaft is accelerated in its rotation and the centrifugal weight starts its displacement, the centrifugal force of the centrifugal weight increases in accordance with the displacement thereof and the biasing force of the spring also increases in accordance with the displacement of the spool valve. In this case, however, the rate of increase in the centrifugal force of the centrifugal weight becomes far larger than that in the biasing force of the spring, as a result of which the spool valve can be displaced swiftly to the second position, thus placing the oil pressure cylinder of the direct coupling clutch into communication with the high pressure oil passage and ensuring the proper operation of the spool valve without occurrence of so-called chattering phenomena.

Additionally, the valve port extends at right angles to a radial plane of the input shaft so that dust and dirt included in pressure oil within the valve port and normally pushed outwardly by the centrifugal force is retained in the annular passage formed on the inner peripheral surface of the valve port so that dust and dirt does not stay on the sliding surfaces of the land portion of the spool valve and the valve port, thereby preventing dust and dirt from being drawn into these sliding surfaces by sliding movements of the spool valve to ensure a smooth operation of the spool valve.

For a better understanding of the invention, and to show how the same may be carried into effect, reference will now be made, by way of example, to the accompanying drawings, in which:—

Fig. 1 is a schematic illustration of an automatic speed change gear for vehicles, provided with a control device;

Fig. 2 is a view showing a combination of Fig. 2A and Fig. 2B, Fig. 2A being an enlarged longitudinal sectional side view of one half of a torque converter and a high speed clutch with its associated parts as shown in Fig. 1, and Fig. 2B being the other half of the same;

Fig. 3 is a sectional view taken along line III—III of Fig. 2A; and

Fig. 4 is a diagram of an oil pressure circuit.

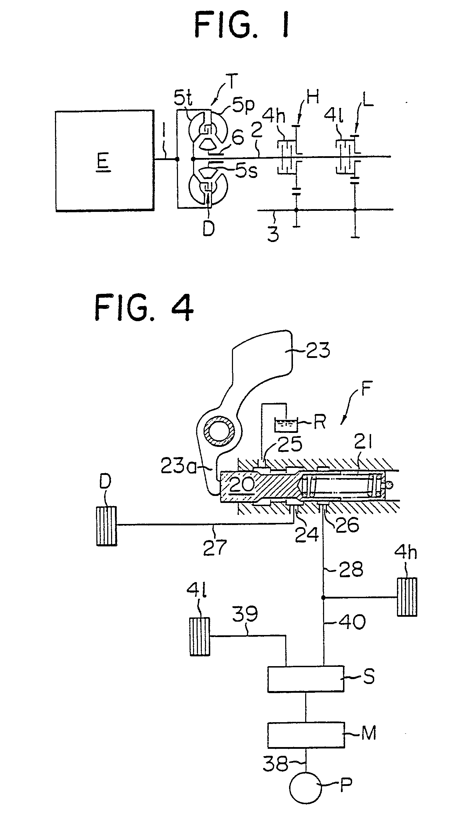

Referring first to Fig. 1 of the drawings there is shown an engine E which has a driving shaft 1 connected to an input shaft 2 of a speed change gear through a torque converter T, the input shaft 2 being in turn connected to an output spool 3 through a low speed gear device L and a high speed device H. The low and high speed gear devices L, H have a hydraulically operated low speed clutch 4l and high speed clutch 4h, respectively, which are adapted to be selectively actuatable to operate the desired gear device L or H so as to change the gear ratio between the input and output shafts 2, 3.

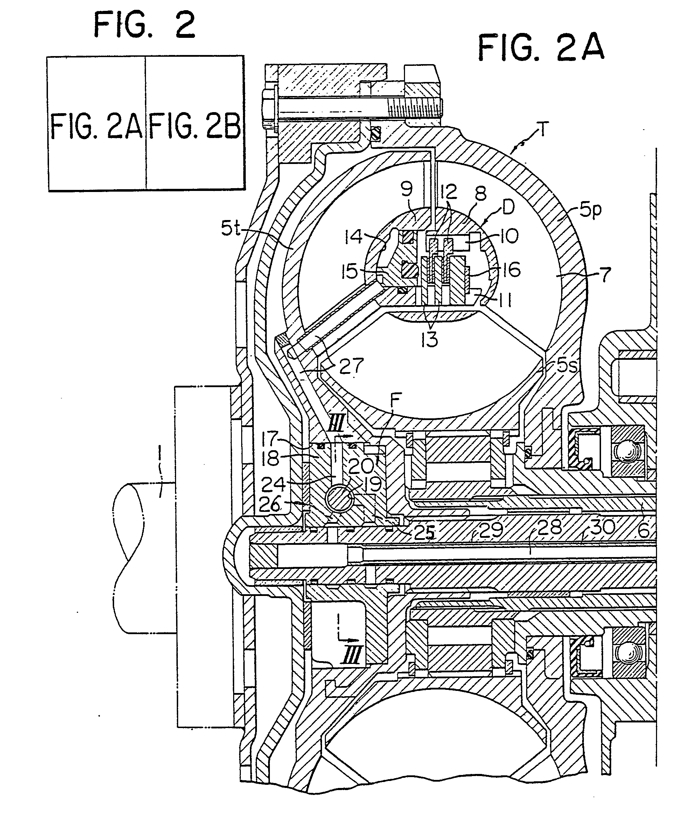

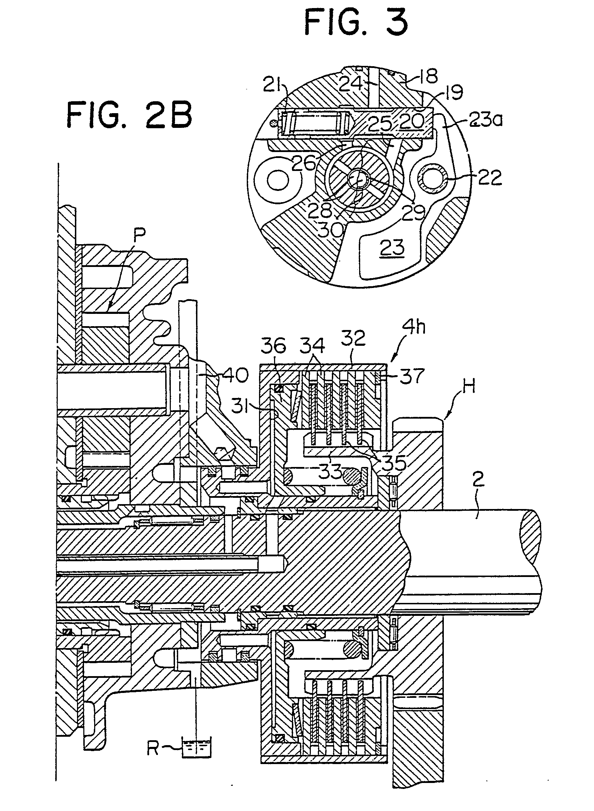

As is shown in detail in Figs. 2A and 2B, the torque converter T is composed of a pump disc 5p associated with the driving shaft 1 of the engine E, a turbine disc 5t associated with the input shaft 2, and a stator disc 5s associated with a stator shaft 6 supported on the outer periphery of the input shaft 2, and a direct coupling clutch D of the construction as described below is interposed between the pump disc 5p and the turbine disc 5t.

Annular inner peripheral walls 8 and 9 of the pump disc 5p and turbine disc 5t are opposed to define a transmission oil passage 7 between both discs 5p and 5t, and have a clutch outer 10 and a clutch inner 11 formed therein in concentric relation. The clutch outer 10 and clutch inner 11 respectively have a plurality of driving friction plates 12 and a plurality of driven friction plates 13 spline-engaged therewith for sliding movement, the plates 12, 13 being alternately superposed one over another. In the inner peripheral wall 9 of the turbine disc 5t is formed an annular oil pressure cylinder 14, which receives therein a pressure piston 15 opposing one side of the superposed friction plates 12, 13, and a pressure receiving ring 16 opposing the other side of the friction plates 12, 13 is locked to the clutch inner 11. Thus, when pressure oil is fed into the oil pressure cylinder 14, the resulting pressure causes the pressure piston 15 to advance to thereby bring, in cooperation with the pressure receiving ring 16, the friction plates 12, 13 in friction engagement with each other, that is, to place the direct coupling clutch D in an operative state whereby the pump and turbine discs 5p, 5t may be connected directly.

The chamber between the inner peripheral walls 8 and 9 is in communication with the transmission oil passage 7 through a clearance between the inner peripheral walls so that the oil pressure within the oil passage 7. may be always exerted on the front surface of the pressure piston 15. Accordingly, when the direct coupling clutch D is inoperative, the pressure within the transmission oil passage 7 assuredly maintains the pressure piston 15 in its retracted position to provide a better disengagement between the friction plates 12 and 13.

A centrifugal valve F for controlling the supply and discharge of working oil relative to the oil pressure cylinder 14 is arranged in the boss portion of the turbine disc 5t in the following manner.

Integrally fitted in a recessed housing 17 on one side of the boss portion of the turbine disc 5t is an annular valve body 18 of the centrifugal valve F, the inner peripheral surface of which sealingly engages the outer peripheral surface of the input shaft 2. The valve body 18 has a cylindrical valve port 19 as shown in Fig. 3, the valve port 19 accommodating therein a spool valve 20 and a spring 21 for biasing the inner end thereof. Pivotally supported at 22 on the valve body 18 for radial movement is a centrifugal weight 23 which has an operating arm 23a in abutting engagement with the spool valve 20 at its end extended from the valve port 19 so that the centrifugal weight 23 acts on the spool valve 20 against the biasing force of the spring 21.

An output port 24, a low pressure port 25 and a high pressure port 26 arranged on the opposite sides of the output port are open to the valve port 19 so that as the spool valve 20 is slidably moved inwardly or outwardly, the output port 24 comes into communication with the low pressure port 25 or high pressure port 26.

The output port 24 is connected with the oil pressure cylinder 14 of the direct coupling clutch D through an oil passage 27 formed in the turbine disc 5t; the high pressure port 26 is connected with an oil pressure cylinder 31 of the high speed clutch 4h described later in detail through a high pressure oil passage 28 passing through the center of the input shaft 2; and the low pressure port 25 is connected with an oil reservoir R through an annular low pressure oil passage 29 concentrically formed externally of the high pressure oil passage 28 in the input shaft 2. The adjacent oil passages 28 and 29 are separated by a partition pipe 30 fitted in the input shaft 2.

As shown in detail in Fig. 2, the high speed clutch 4h has a clutch outer 32, which is spline-connected to the input shaft 2 and provided at one side with an oil pressure cylinder 31, and a clutch inner 33, which is concentrically arranged internally of the clutch outer 32 and rotatably supported on the input shaft 2, the clutch outer 32 and clutch inner 33 having a plurality of driving friction plates 34 and a plurality of driven friction plates 35 slidably spline-engaged therewith, the plates 34, 35 being alternately superposed on each other. A pressure piston 36 opposing one side of the friction plates 34, 35 is received in the oil pressure cylinder 31 whilst a pressure receiving ring 37 opposing the other end of the friction plates 34, 35 is locked to the clutch outer 32. The clutch inner 33 is integrally formed with a driving gear of the high speed geared device H. Thus, when pressure oil is fed into the oil pressure cylinder 31, the resulting pressure causes the pressure piston 36 to advance to place, in cooperation with the pressure receiving ring 37, the group of friction plates 34, 35 into frictional contacting engagement with each other, that is, the high speed clutch 4h may be brought into its operating state.

It should be noted that if the centrifugal valve 7 mounted on the boss portion of the turbine disc 5t and the high speed clutch 4h are both disposed on the input shaft 2 and the high pressure oil passage 28 for providing a connection therebetween is disposed in the input shaft 2, it is possible to simply and easily form an oil passage leading from the high speed clutch 4h to the direct coupling clutch D.

Since the construction of the low speed clutch 4l is substantially similar to the abovementioned high speed clutch 4h, the detailed description thereof is omitted.

In Figs. 2A and 2B, reference character P designates an oil pressure source in the form of an oil pressure pump normally driven by the pump disc 5p of the torque converter T.

Next, the oil pressure circuit of the speed change gear will be described with reference to Fig. 4. In the oil passage 28 extended from an outlet of the oil pressure pump P are series-inserted a known manually operated valve M and a known shift valve S which receives two kinds of opposing control signals which are representative of the opening degree of a throttle valve of the engine and of the vehicle speed, respectively, and is operated to take a first position and a second position. Oil pressure cylinders of the low speed clutch 4l and high speed clutch 4h are connected to a low speed oil passage 39 and a high speed oil passage 40 both branched from the output side of the shift valve S. The oil pressure circuits in connection with the high speed clutch 4h, centrifugal valve F and direct coupling clutch D have already been explained with reference to Fig. 2.

The operation of the above-mentioned embodiment will now be explained. In Figs. 2A and 2B, when the torque converter T is operated in a speed change region and the turbine disc 5t is rotated at a low speed, the centrifugal force acting on the centrifugal weight 23 rotating with the turbine disc 5t is small, and therefore, the spool valve 20 is held in an outward position under the resiliency of the spring 21 against the aforesaid centrifugal force so that the oil pressure cylinder 14 of the direct coupling clutch D is brought into communication with the low pressure oil passage 29, thus opening to the oil reservoir R. Accordingly, the direct coupling clutch D is maintained inoperative so as not to impair the speed changing action of the torque converter T.

When the torque converter T is operated to go beyond the speed change region into the clutch region where no torque increasing action takes place, as a consequence of which the rotational speed of the turbine disc 5t increases to a level in excess of a given value, the correspondingly increasing centrifugal force of the centrifugal weight 23 causes the spool valve 20 to be biased inwardly against the set load of the spring 21 so that the oil pressure cylinder 14 of the direct coupling clutch D is brought into communication with the high pressure oil passage 28 and thus with the oil pressure cylinder 31 of the high speed clutch 4h.

If, at this time, the low speed oil passage 39 is selected by the shift valve S in Fig. 4 to feed pressure oil from the oil pressure pump P to the low speed clutch 4l, that is, if the low speed gear device L is in operative state, a supply of pressure oil to the high speed clutch 4h is interrupted so that the direct coupling clutch D in communication therewith is not supplied with pressure oil and thus remains in its inoperative state. On the other hand, if the shift valve S is switched to select the high speed oil passage 40 to feed pressure oil to the high speed clutch 4h, that is, if the high speed gear device H assumes its operative state, pressure oil is supplied also to the oil pressure cylinder 14 of the direct coupling clutch D through the high pressure oil passage 28 and as a result, the pump disc 5p and turbine disc 5t may be connected mechanically by the operation of the clutch D.

As the hydraulically operated direct coupling clutch is interposed between the pump disc and turbine disc of the torque converter, when the turbine disc reaches a rotation speed in excess of a given value the centrifugal valve operatively connected therewith may act to apply working oil pressure to the aforesaid direct coupling clutch so as to directly couple both the discs. Accordingly, the slip loss between the aforesaid discs may be substantially eliminated in the region where no speed changing action of the torque converter takes place, thereby improving the transmission efficiency and the consumption rate of fuel.

**Claim**

A control device for a torque converter in an automatic speed change gear for vehicles, the automatic speed change gear having an input shaft (2) connected to a driving shaft (1) of the engine (E) through a torque converter (T); the torque converter having a pump disc (5p) associated with the driving shaft (1) and a turbine disc (5t) associated with the input shaft (2); the input shaft (2) being connected to an output shaft (3) through an at least two-stage, low speed gear device (L) and high speed gear device (H) having respective hydraulically operated clutch means (4l, 4h) including for the high speed gear device (H), a hydraulically operated clutch (4h) mounted on the input shaft (2); there being disposed between oil pressure cylinders of said hydraulically operated clutch means (4l, 4h) and an oil pressure source (P) a shift valve (S) for selectively communicating the oil pressure source (P) with one of these oil pressure cylinders; and there being interposed between the pump disc (5p) and the turbine disc (5t) a hydraulically operated direct coupling clutch (D) which is capable of directly coupling the pump and turbine discs; the direct coupling clutch (D) comprising an oil pressure cylinder (14) formed in one of opposed annular inner peripheral walls (8, 9) of the pump and turbine discs (5p, 5t), which walls define therebetween a transmission oil passage (7), and a clutch operating pressure piston (15) received in the oil pressure cylinder (14) so that oil pressure in the transmission oil passage (7) acts on the front surface of the pressure piston (15); and there being a centrifugal valve (F) disposed between the oil pressure cylinder (14) of the direct coupling clutch (D), a high pressure oil passage (26) connected to the oil pressure cylinder of the hydraulically operated clutch (4h) for the high speed gear device (H) and a low pressure oil passage (29) connected to an oil reservoir (R), this centrifugal valve (F) being operatively connected with the turbine disc (5t) for serving to place the oil pressure cylinder (14) of the direct coupling clutch (D) in communication with the low pressure oil passage (29) at the time of low speed rotation and with the high pressure oil passage (28) at the time of high speed rotation; the centrifugal valve (F) having an annular valve body (18) fitted between the turbine disc (5t) and the input shaft (2), and being hydraulically connected with the hydraulically operated clutch (4h) for the high speed gear device (H) through an oil passage (28) in the input shaft (2); characterised in that the valve body (18) of the centrifugal valve (F) rotates fast with the turbine disc (5t), and in that the centrifugal valve (F) further comprises a valve port (19) formed in its valve body (18) and extending at right angles to the axial direction of the input shaft (2), a spool valve (20) slidably fitted in this valve port (19), a biasing means (21) for biasing the spool valve (20) in one axial direction of the valve port (19), and a centrifugal weight (23) pivotally supported on the valve body (18) at a location spaced radially from the axis of the input shaft (2), the centrifugal weight (23) having an operating arm (23a) in abutting engagement with the spool valve (20) for serving to displace the spool valve (20) in the opposite axial direction of the valve port (19) against the force of said biasing means (21).

## Revendication

Système de commande pour un convertisseur de couple d'une transmission à changement de vitesse automatique, la transmission à changement de vitesse automatique possédant un arbre d'entrée (2) relié à un arbre d'entraînement (1) du moteur (E) par un convertisseur de couple (T); le convertisseur de couple possédant un disque de pompe (5p) associé à l'arbre d'entrée (2); l'arbre d'entrée (2) étant relié à un arbre de sortie (3) par un système ayant au moins deux étages, un système d'engrenage à basse vitesse (L) et un système d'engrenage à haute vitesse (H) possédant chacun un dispositif d'embrayage actionné hydrauliquement (respectivement 4l, 4h) comprenant, pour le système d'engrenage à haute vitesse, un embrayage actionné hydrauliquement monté sur l'arbre d'entrée (2); une soupape de déviation (S) étant placée entre les cylindres de pression d'huile desdits dispositifs d'embrayage actionnés hydrauliquement (4l, 4h) et une source de pression d'huile (P) pour mettre en communication sélectivement la source de pression d'huile avec l'un de ces cylindres de pression d'huile; et un embrayage à accouplement direct (D) actionné hydrauliquement, capable d'accoupler directement les disques de pompe et de turbine, étant interposé entre le disque de pompe (5p) et le disque de turbine (5t); l'embrayage à accouplement direct (D) comprenant un cylindre de pression d'huile (14) formé dans l'une des parois périphériques internes annulaires opposées (8, 9) des disques de pompe et de turbine (5p, 5t), ces parois définissant entre elles un passage de transmission d'huile (7) et un piston à pression (15) actionnant l'embrayage disposé dans le cylindre de pression d'huile (14) de sorte que la pression d'huile dans le passage de transmission d'huile (7) agisse sur la surface frontale du piston à pression (15); et une soupape centrifuge (F) étant disposée entre le cylindre de pression d'huile (14) de l'accouplement direct (D), une conduite d'huile à haute pression (26) étant reliée au cylindre de pression d'huile de l'embrayage actionné hydrauliquement (4h) du système d'engrenage à haute vitesse (H) et une conduite d'huile à basse pression (29) étant reliée à un réservoir d'huile (R), cette soupape centrifuge (F) étant opérationnellement reliée au disque de turbine (5t) pour mettre le cylindre de pression d'huile (14) de l'embrayage à accouplement direct (D) en communication avec la conduite d'huile à basse pression (29) lors d'une rotation à basse vitesse et avec la conduite d'huile à haute pression (28) lors d'une rotation à haute vitesse; la soupape centrifuge (F) possédant un corps de soupape annulaire (18) monté entre le disque de turbine (5t) et l'arbre d'entrée (2), et étant hydrauliquement reliée à l'embrayage actionné hydrauliquement (4h) du système d'engrenage à haute vitesse (H) par une conduite d'huile (28) dans l'arbre d'entrée (2); caractérisé en ce que le corps de soupape (18) de la soupape centrifuge (F) tourne rapidement avec le disque de turbine (5t), et en ce que la soupape centrifuge (F) comprend de plus un orifice de soupape (19) pratiqué dans son corps de soupape (18) et s'étendant à angle droit de la direction axiale de l'arbre d'entrée (2), une soupape de distribution (20) montée de manière à pouvoir glisser dans cet orifice de soupape (19), un système de poussée (21) pour pousser la soupape de distribution (20) dans une direction axiale de l'orifice de soupape (19), et un poids centrifuge (23) fixé de manière à pouvoir pivoter sur le corps de soupape (18) à un endroit espacé radialement de l'axe de l'arbre d'entrée (2), le poids centrifuge (23) possédant un bras actionneur (23a) s'engageant en butée contre la soupape de distribution (20) dans le but de déplacer la soupape de distribution (20) dans la direction axiale de l'orifice de soupape (19) opposée à celle de la force dudit système de poussée (21).

## Patentanspruch

Bedienungsvorrichtung eines Drehmomentenwandlers eines automatischen Fahrzeuggetriebes, wobei das automatische Fahrzeuggetriebe eine Eingangswelle (2), die mit einer Antriebswelle (1) einer Antriebsmaschine (E) über den Drehmomentenwandler (T) verbunden ist, aufweist, wobei der Drehmomentenwandler eine Pumpenscheibe (5p), die der Antriebswelle (1) zugeordnet ist, und eine Turbinenscheibe (5t), die der Eingangswelle zugeordnet ist, hat, wobei die Eingangswelle (2) mit einer Ausgangswelle (3) über eine zumindest zweistufige Niedriggeschwindigkeits-Getriebeanordnung (L) und eine Hochgeschwindigkeits-Getriebeanordnung (H), welche jeweils hydraulisch betätigte Kupplungseinrichtungen (4l, 4h) haben, die für die Hochgeschwindigkeits-Getriebeanordnung (H) eine hydraulisch betätigte Kupplungseinrichtung (4h) enthalten, welche auf der Eingangswelle (2) angebracht ist, verbunden ist, wobei zwischen Öldruckzylindern der hydraulisch betätigten Kupplungseinrichtungen (4l, 4h) und einer Öldruckquelle (P) ein Schaltventil (S) zum wahlweisen Verbinden der Öldruckquelle (P) mit einem

dieser Öldruckzylinder angeordnet ist, wobei zwischen der Pumpenscheibe (5p) und der Turbinenscheibe (5t) eine hydraulisch betätigte Direktkupplung (D), die in der Lage ist, die Pumpenscheibe und die Turbinenscheibe direkt miteinander zu kuppeln, angeordnet ist, wobei die Direktkupplung (D) einen Öldruckzylinder (14), der in einer von sich gegenüberstehenden, ringförmigen inneren Umfangswandungen (8, 9) der Pumpenscheibe (5p) und der Turbinenscheibe (5t) ausgebildet ist, welche Wandungen zwischen sich einen Getriebeölkanal (7) definieren, und einen Kupplungsbetätigungs-Druckkolben (15), der von dem Öldruckzylinder (14) aufgenommen wird, so daß Öldruck in dem Getriebeölkanal (7) auf die Vorderseite des Kupplungsbetätigungs-Druckkolbens (15) einwirkt, enthält, wobei ein Fliehkraftventil (F), das zwischen dem Öldruckzylinder (14) und der Direktkupplung (D) angeordnet ist, ein Hochdruck-Ölkanal (26), der mit dem Öldruckzylinder der hydraulisch betätigten Kupplungseinrichtung (4h) für die Hochgeschwindigkeits-Getriebeanordnung (H) verbunden ist, und ein Niedrigdruck-Ölkanal (29), der mit einem Ölvorratsbehälter (R) verbunden ist, vorgesehen sind, wobei das Fliehkraftventil (F) wirksam mit der Turbinenscheibe (5t) zu dem Zwecke verbunden ist, den Öldruckzylinder (14) der Direktkupplung (D) in Verbindung mit dem Niedrigdruck-Ölkanal (29) während der Dauer einer Drehbewegung bei niedriger Geschwindigkeit und mit einem Hochdruck-Ölkanal (28) während der Dauer einer Drehbewegung mit hoher Geschwindigkeit zu bringen, und wobei das Fliehkraftventil (F) einen ringförmigen Ventilkörper (18) hat, der zwischen der Turbinenscheibe (5t) und der Eingangswelle (2) angebracht und hydraulisch mit der hydraulisch betätigten Kupplungseinrichtung (4h) für die Hochgeschwindigkeits-Getriebeanordnung (H) über den Hochdruck-Ölkanal (28) in der Eingangswelle (2) verbunden ist, dadurch gekennzeichnet, daß sich der Ventilkörper (18) des Fliehkraftventils (F) schnell mit der Turbinenscheibe (5t) dreht und daß das Fliehkraftventil (F) desweiteren aus einer Ventilöffnung (19), die in dessen Ventilkörper (18) ausgebildet ist und sich unter einem rechten Winkel zu der axialen Richtung der Eingangswelle (2) erstreckt, einem Steuerschieber (20), der verschiebbar in der Ventilöffnung (19) angeordnet ist, einer Vorspanneinrichtung (21) zum Vorspannen des Steuerschiebers (20) in einer axialen Richtung der Ventilöffnung (19) und einem Fliehgewicht (23), das schwenkbar auf dem Ventilkörper (18) an einem Ort gehalten wird, der einen radialen Abstand von der Achse der Eingangswelle (2) aufweist, besteht, wobei das Fliehgewicht (23) einen Betätigungsarm (23a) hat, der in einem Andruckeingriff mit dem Steuerschieber (20) in der entgegengesetzten axialen Richtung der Ventilöffnung (19) gegen die Kraft der Vorspanneinrichtung (21) steht.

# FIG. 1

# FIG. 4

FIG. 2

| FIG. 2A | FIG. 2B |

FIG. 2A

0 006 943

FIG. 3

FIG. 2B

3